# EUROPEAN PATENT SPECIFICATION

(11) **EP 4 608 628 B1**
(45) Date of publication and mention of the grant of the patent: **05.08.2026**
(21) Application number: 23800758.7
(22) Date of filing: 25.10.2023
(51) Int. Cl.: B29C 44/60, G06F 30/20, G06F 30/23, G01N 11/00, B29C 45/76, B29C 44/42, G06F 111/10, G06F 113/22

(54) **METHOD AND SYSTEM FOR PREDICTING A MOLD FILLING PROCESS OF A FOAM MIXTURE**
VERFAHREN UND SYSTEM ZUR VORHERSAGE EINER FORMFÜLLUNG VERFAHREN EINER SCHAUMMISCHUNG
PROCÉDÉ ET SYSTÈME POUR PRÉVOIR UN REMPLISSAGE DE MOULE PROCESSUS D'UN MÉLANGE DE MOUSSE

(30) Priority: 26.10.2022 EP 22203789
(43) Date of publication of application: 03.09.2025
(73) Proprietor: Covestro Deutschland AG, 51365 Leverkusen (DE)
(72) Inventor: IREKA, Ikenna, 40789 Monheim am Rhein (DE); KRAUSE, Dennis, 50767 Cologne (DE); WICK, Achim, 51069 Cologne (DE); MEDEIROS DE SOUZA, Luis, 50679 Cologne (DE); STANKIEWICZ, Bartosz, 40477 Düsseldorf (DE); MUELLER, Christian, 50825 Cologne (DE); FROEBEL, Sascha, 40591 Duesseldorf (DE); SCHMIDT, Stefan, 51709 Marienheide (DE)
(74) Representative: Levpat
(86) International application number: PCT/EP2023/079791
(87) International publication number: WO 2024/089109

(56) References cited:
- EP-A1- 1 615 152
- US-A- 5 740 074
- GEIER S ET AL: "Numerical Simulation of Mold Filling Processes with Polyurethane Foams", CHEMICAL ENGINEERING & TECHNOLOGY, J. WILEY, HOBOKEN, USA, vol. 32, no. 9, 27 July 2009 (2009-07-27), pages 1438 - 1447, XP071790870, ISSN: 0930-7516, DOI: 10.1002/CEAT.200900202
- CLEMENT RAIMBAULT ET AL.: "Foaming parameter identification of polyurethane using FOAMAT® device", POLYM ENG SCI, vol. 61, 20 March 2021 (2021-03-20), pages 1243 - 1265, XP002808830, DOI: 10.1002/pen.25676

## Description

The present disclosure relates to methods and systems for predicting a mold filling process of a foam mixture, the foam mixture expanding and several characteristics of the foam mixture changing during a foaming process.

Foam mixtures are widely used, e.g., at thermal insulation, at acoustic insulation, at stiffening of structures, as adhesive, and/or as filling material, just to name a few possible usages, which are sometimes concurrently fulfilled. An important representative of such foam mixtures is polyurethane foam. The foam mixtures might comprise several components and might even be a combination of two or more different types of foams. The components of the foam mixture react with each other during a foaming process, thus leading to an expansion of the foam mixture. During the foaming process, several characteristics of the foam mixture changes, e.g., temperature, volume, chemical composition, etc.

In many cases, the foam mixtures are used for filling a mold. For instance, such a mold might be a car door or a vehicle dashboard, that should be filled with a foam mixture for thermal and acoustic insulation. When filling the mold, it is desirable that the mold is sufficiently filled with the expanded and cured foam. To this end, properties of the foaming process have to be controlled, e.g., temperature, injection pressure, injection point(s), etc. However, these properties are based on the foam mixture used at the mold filling process, the mold to be filled, and various other constraints. This means that, for a foam mixture with an unknown expansion behavior, several molds have to be filled with several different specifications of the mold filling process, until a desired mold filling result is found. This causes a huge experimental effort. A change at the mold might lead to another mold filling behavior of the foam mixture, so that each mold change leads to new mold filling experiments.

Even if, after numerous experiments, a specification of the molding process is found that result in a sufficient filling of the mold, it is still unclear, whether the result is close to an optimal mold filling behavior. It is possible that a similar result can be achieved by a reduced quantity of foam mixture, with a better quality of the resulting foam, or with an even more homogeneous foam distribution in the mold. That means that mold filling experiments may not lead to optimal results.

There are several approaches known in the art which can be used at estimating at least parts of the behavior of an expanding polymeric foam mixture such as the viscosity. For instance, WO 2021/249897 A1 relates to the determination of at least one empirical coefficient that can be used in calculating the viscosity of a thermoplastic polymer melt. A capillary rheometer measures at least one rheological property of the polymer melt. A solvable generalized Newtonian fluid model describes the same at least one rheological property and includes the at least one empirical coefficient. A difference between the measured value and the result of the generalized Newtonian fluid model is minimized by iteratively adapting the empirical coefficient. The thus determined empirical coefficient is input to a solvable Navier-Stokes model. Based on the result of the Navier-Stokes model and the measured value, the empirical coefficient is further adapted iteratively. Although the viscosity is an important property of a foaming mixture, it is not sufficient to predict a mold filling behavior.

US 5,740,074 A pertains to a method for filling a compartment cavity, such as a refrigerator cavity, with a foam produced by an expansion and solidification of a foaming mixture of predetermined chemicals. To this end, a known amount of the foaming mixture is created in a test chamber cavity and preselected parameters (such as free surface height and pressure) are measured to obtain the average density and apparent viscosity of the foam as a function of time. Using these parameters (the average density and apparent viscosity) a computer simulation is carried out to simulate the foam expansion as a function of time of a prechosen quantity of the prechosen foaming mixture created at a prechosen location in an enclosure cavity having the same geometry as the compartment cavity. The method of US 5,740,047 A characterizes the foaming processes by estimating the mixture viscosity using the attributes of a free rise expanding foam only. However, to accurately describe the spatial evolution of the foam front, it is essential to account for the flow behavior at the early stage of the foaming process. Therefore, extrapolating the viscosity of the foaming mixture using a "semi-empirical approach" as well as not including the essential rheokinetics, limits the possibility to accurately describe the mold filling process of expanding polyurethane foams.

The research article "Numerical Simulation of Mold Filling Processes with Polyurethane Foams" (Chem. Eng. Technol. 2009, 32,No. 9, p. 1438-1447) takes a similar approach by also using temporal changes of the foaming mixture to characterize the free rise behavior of the expanding foam, e.g. in a beaker. Although additional equations for the chemical kinetics are solved, the influence of the polyurethane chemistry on the flow behavior of the expanding mixture is not explicitly shown. The foam viscosity model applied is purely theoretical as there are no experiments disclosed for the validation of the model. Moreover, the validation in a beaker is often not sufficient to fully capture the flow behavior of the expanding foam. To achieve an optimal mold design and the filling behavior of relevant foaming mixture in the mold, it is imperative to conduct extensive experiments and tests. However, it would be beneficial if such extensive trials are minimized. Therefore, it is an object of the present disclosure to provide a method and a system that allows for predicting mold filling behavior of a foam mixture

The present disclosure proposes a method for predicting a mold filling process of a foam mixture, the foam mixture expanding and several characteristics of the foam mixture changing during a foaming process, comprising:
Receiving first experimental data, the first experimental data comprising first measured values of at least one of the several characteristics, wherein at least some of the first measured values are measured at different points of time during a foaming process of the foam mixture, preferably in a cavity,
Receiving a first model, the first model describing a time-related behavior of at least one of the several characteristics during an expansion of the foam mixture, wherein the first model comprises one or several parameters,
Determining a first set of parameters based on the first experimental data and the first model,
Receiving second experimental data, the second experimental data comprising second measured values representing a propagation of the foam mixture expanding on a predefined surface, wherein the predefined surface is formed by an inclined surface so that the foam mixture flows on the surface by the influence of gravity during the foaming process,
Receiving a second model, the second model describing a foam propagation during a foaming process of the foam mixture on the predefined inclined surface, wherein the second model comprises one or several parameters,
Determining a second set of parameters based on the second experimental data and the second model, and
Outputting at least one of the first set of parameters, the second set of parameters and a combination of the first and second set of parameters to be used at predicting the mold filling process of the foam mixture.

Regarding first and second experimental data and first and second models, it should be noted that "first" and "second" does not indicate a specific sequence of a data acquisition or a specific order of the data and/or of the model or a specific sequence of associated steps of the method according to the present disclosure. The adjective should just distinguish the experimental data and the models.

Additionally, it should be noted that the usage of "and/or" between two features should be understood as a generic expression for one of three different embodiments: A first embodiment which contains the first feature, a second embodiment which contains the second feature, and a third embodiment which contains the first and second features.

It has been recognized that the mold filling behavior of a foam mixture can be derived from basic tests performed outside the mold. Generally, a mold defines constraints for the expansion of a foam mixture: During a foaming process, each wall of the mold may hinder expansion of the foam mixture perpendicular to the wall, each variation of the surface structure of the mold may influence the flowing behavior of the foam mixture. But apart from these constraints, the foam mixture behaves similarly, both outside the mold and inside the mold. Therefore, values, which describe a foaming behavior of the foam mixture outside the mold, also describe the foaming behavior of the foam mixture inside a mold. I.e., based on basic tests outside the mold, the behavior of the foam mixture inside the mold can be derived.

To this end, the present disclosure uses first and second experimental data, which results from measurements during first and second tests. Both tests analyze the behavior of the foam mixture during the foaming process.

The first test may relate to free-rising expansion of the foam mixture. For facilitating measurements, the expansion may be limited in some directions. In one embodiment, the expansion takes place in a cavity, e.g., formed by a beaker. With such a test, chemorhelogical and/or kinetic properties of the foaming process can be determined. At this first test, a measurement device can be used. This measurement device can comprise a bottom plate, a heating (e.g., incorporated in the bottom plate), and various sensors. A beaker can be positioned on the bottom plate, and the change of the characteristics of the foam mixture can be monitored by the sensors. The sensors might comprise a dielectric sensor, a pressure sensor, a temperature sensor, and/or a height sensor (e.g., laser or ultrasonic sensor positioned above the beaker). The acquired data might additionally be used by a control unit of the measurement device. Such a measurement device is distributed as FOAMAT^{®} by Format Messtechnik GmbH, Karlsruhe, Germany, just to name one possible, commercially available measurement device.

Such a first test or a different first test generates first measured values, which are part of first experimental data. The first measured values generally contain several values and might contain values measured by different sensors and/or measured at different points of time during an expansion of the foam mixture. The first experimental data can be input to the method according to the present disclosure and/or to a first experimental data interface of a system according to the present disclosure.

A second test may relate to the flow behavior of the foam mixture during a foaming process. During the second test, the foam mixture may expand on a predefined surface and the propagation of the foam mixture along the surface may be measured. The expansion can occur freely, i.e., just influenced by the predefined surface in a predefined way. Using knowledge about the predefined surface, measured values of the foam propagation provide information on the flow behavior of the foam during the foaming process. The predefined surface can be embodied in different manners, as long as the predefined surface influences the expanding foam mixture in a predefined and deterministic way. According to the invention, the predefined surface is formed by an inclined surface so that the foam mixture flows on the surface influenced by gravity during the foaming process. This test provides the benefit that its results are focused on the rheological properties of the foam mixture rather than its expansion properties. The inclination should be big enough to influence the flow of the foam. However, the inclination should be small enough so that the foam does not flow too quickly and that measurements during the foaming process are possible. In one embodiment the inclination is bigger or equally to 1° relative to a horizontal direction, in another embodiment the inclination is bigger or equal to 5°, and in yet another embodiment, the inclination is bigger or equal to 10°. In one embodiment, the inclination is smaller or equal to 50° relative to a horizontal direction, in another embodiment, the inclination is smaller or equal to 30°, and in yet another embodiment, the inclination is smaller or equal to 20°.

This or a similar second test generates second measured values, which are part of second experimental data. The second measured values generally contain several values. The second measured values may refer to different characteristics of the foam mixture and/or be measured at different points of time during the expansion of the foam mixture. Besides information about the propagation of the foam mixture during the second test, the second measured value may refer to additional characteristics, like a temperature, a volume of the foam mixture, the width of the foam mixture, etc. The second experimental data can be input to the method according to the present disclosure and/or to a second experimental data interface of a system according to the present disclosure.

According to an advantageous embodiment the second measured values are generated by capturing a time series of images showing the evolution of the foam front in a flow scenario on the predefined surface. By implementing an image recognition algorithm the evolution of the foam front can be analyzed in order to extract the dimensional information as well as the rheological behavior of the flowing foam mixture. For instance, it is possible to design the predefined surface such that tracking the propagating foam front by an image recognition algorithm is achieved with relative ease (e.g.by a "chessboard" design).

Image recognition methods and algorithms that can be applied here are known from the art. For example, in the textbook "Computer Vision and Machine Learning for Intelligent Sensing Systems" (2023), MDPI - Multidisciplinary Digital Publishing Institute. https://doi.org/10.3390/books978-3-0365-7869-9 several use cases of different domains and techniques to solve computer vision related tasks are described. The publication CVIP, C. (7th : 2022 : N. I. (2023), "Computer vision and image processing : 7th International Conference", CVIP 2022, Nagpur, India, November 4-6, 2022, revised selected papers. Part II, Springer. https://doi.org/10.1007/978-3-031-31407-0 provides insight into deep neural network architecture configurations specifically tuned for the application of computer vision tasks. Finally, the research paper "Deep Learning for Toxicity and Disease Prediction", (2020), Frontiers Media SA. https://doi.org/10.3389/978-2-88963-632-7 provides valuable insights on how to resolve image segmentation problems. Since the domain of computer vision has an overlap with engineering, the underlying hardware setup for image analysis is crucial for successful implementation of relevant image recognition algorithms. Therefore, this paper provides concrete hardware setup for emerging challenges in image analysis.

The first model describes a time-related behavior of at least one of several characteristics of the foam mixture, which are changing during a foaming process. The first model comprises one or several parameters, whose values are related to the changing characteristics of the foam mixture. The second model describes a foam propagation during the expansion of the foam mixture. The second model comprises one or several parameters, whose values are related to the propagation of the foam mixture. The term "propagation" refers to a movement of the foam mixture parallel to the predefined surface. This may describe to which extend an outer boundary of the foam mixture has moved in a predefined direction within a period of time.

Regarding the "first model" and the "second model", it should be noted that these models generally describe a certain behavior of the foam mixture under certain conditions. That means that the models describe different aspects of the behavior of the foam mixture. This can be fulfilled in various ways. The first and second models may be completely independent to each other, i.e., the models are based on different assumptions or modelling schemes. However, the first and second models may also be based on the same modelling schemes, i.e., the models may originate from the same concept. In this regard, both models might originate from a more general concept, where the first model is derived as a first subset or first generalization or first simplification and the second model is derived as a second subset or second generalization or second simplification. But the first model and the second model may be derived from each other, e.g., that one of those models is a more general version of the other one.

A first model and/or a second model can be based on a modelling scheme as disclosed in Clément Raimbault et al: "Foaming parameter identification of polyurethane using FOAMAT® device", Polym Eng Sci. 2021; 61: 1243-1265 or in Joe Wang: "Combination of PU System with CAE Simulation for Accurate PU Foaming Prediction", 2021, https://www.moldex3d.com/combination-of-pu-foamat-system-with-cae-simulation-for-accurate-pu-foaming-prediction/ or in R. Rao et al: "Density predictions using a finite element/level set model of polyurethane foam expansion and polymerization", Computers and Fluids (2018), 175: 20-35.

The first and second model can be represented in various ways. They can be represented by a solvable formula that provides a relation between several variables and/or coefficients. The one or several parameters can be one of these variables and/or coefficients or a term influencing this relation. If the models have a low number of variable and/or coefficients, they can also be represented by look-up tables. However, with an increasing number of variables and/or coefficients, this approach may reach a limit, as many relative dependencies are possible and as the look-up table may have a high dimension. The first and second model can also incorporate artificial intelligence approaches. The models can, for instance, comprise a neural network that has been trained with measured values from various foaming processes of similar foaming mixtures.

It should be noted that the one or several parameters of the first and second models can be formed by various things. The parameters should be related to the foam mixture and/or its behavior during the foaming process. A parameter can be a constant number, it can be related to a characteristic of the foam mixture (changing or constant throughout the foaming process), or it can be related to a physical and/or chemical quantity during the foaming process. These examples are provided just for clarification and should not be understood as limiting. It is possible that a parameter of the first model is also a parameter of the second model and vice versa. As the parameters are related to the foam mixture and/or its foaming behavior, shared parameters may be usual and may support the quality of predicting the mold filling behavior.

The one or several parameters of the first model are incorporated in the first set of parameters, the one or several parameters of the second model are incorporated in the second set of parameters. A combination of the first and second sets of parameters may contain one or several parameters of the first model and/or one or several parameters of the second model. The combination of the first and second sets of parameters may additionally contain parameters derived from parameters of the first and/or second model. The first set of parameters, the second set of parameters, and/or the combination of the first and second sets of parameters may describe at least part of the behavior of the foam mixture during a foaming process so that a mold filling process can be predicted.

For determining the first and second sets of parameters, the first test is related to the first model and the second test is related to the second model. This may mean that the test measures something that is modeled by the corresponding model. E.g., if the first model models the chemical kinematics and the free expansion of the foam mixture, the first test should relate to the chemical kinematics and/or the free expansion, too. In one embodiment, the first test measures the height, the temperature and/or the pressure of the foam mixture during the foaming process. Then the first model may also be related to at least one of these measured values, preferably to all three of them. E.g., if the second model models the viscosity of the foam mixture, the second test should also relate to the viscosity. In one embodiment, the second test measures the propagation of the foam mixture on an inclined surface. Then the second model may also be related to the propagation of the foam mixture.

"Determining a first set of parameters" and/or "determining a second set of parameters" can be performed in various ways. The "determining" is based on the experimental data and the respective model. This means that "determining a first set of parameters" establishes a link between the first set of parameters, the first experimental data and the first model, and that "determining a second set of parameters" establishes a link between the second set of parameters, the second experimental data and the second model. How this link is established, is not essential for the present disclosure. The "determining" can be understood as a matching of the model with the corresponding experimental data, where the parameters are variables for this matching process. This might be done by a Heuristic algorithm, Monte Carlo approach or a Bayes estimator. However, it might also be obtained via artificial intelligence, e.g., using a neural network.

A "foaming process" refers to the expansion of the foam mixture, i.e., the conversion of the initial liquid resin material(s) of the foam mixture to a (cured) foam matrix through chemical reaction. The foaming process may start with the beginning of the reaction of the components of the foam mixture, e.g., with other components of the foam mixture and/or with surrounding air. The foaming process may end with termination of the reaction and/or the curing of the foam. For the purpose of the present disclosure, the foaming process may also be limited to a representative phase of the foaming of the foam mixture, e.g., to the period, during which the foam experiences a considerable volume increase.

A "foam mixture" may comprise one or several components and might even be a combination of two or more different types of foams. The components of these foam mixtures react with each other and/or with the surrounding air, during a foaming process, thus leading to an expansion of the foam mixture. According to one embodiment, the foam mixture comprises a polyurethane foam.

The "characteristics" of the foam mixture that changes during a foaming process can refer to various things. It might refer to various chemical and/or physical characteristics, e.g., a volume, a rise height, a pressure, a temperature, a dielectric polarization, a consistency, an available amount of reactants, a chemical composition, a weight, a weight loss, a flowability, etc. With regard to the present disclosure, the term might be limited to characteristics that have an impact on the mold filling behavior of the foam mixture, e.g., volume, rise height, temperature, pressure, and flowability.

A "mold" might describe various objects that can be filled with a foam mixture ant that restricts expansion of the foam mixture at least to a certain extend. That means that a cavity is defined within the mold, in which the foam mixture can be injected. The mold can comprise one or several openings. A single opening may be formed by a foam mixture receiving opening through which the foam mixture can be injected into the cavity. Other openings might be used for releasing gases generated during the foaming process. There might also be openings that do not have a direct use, e.g., openings that are there for reducing the weight of the mold. The mold can even be completely open at one side. In one embodiment, the mold is formed by a vehicle part. Such a vehicle part may be a door, a dashboard, a seating arrangement, and/or the like. It should also be noted that the mold does not necessarily have to consist of a single material. The mold can also consist of several materials and might even be delimited at one or several sides by another, already cured foam mixture.

A "mold filling process" refers to the process of filling the mold. This may comprise filling the foam mixture into the mold, i.e., before the foaming process starts. This may comprise the actual foaming process that fills the mold with foam. In some embodiments, the mold filling process might be a combination of injecting the foam mixture and the foaming process, as the foam mixture might expand as soon as it leaves an injection apparatus.

The sets of parameters determined by the method according to the present disclosure can be used in various ways in connection with a mold filling process. As the sets of parameters describe the behavior of the foam mixture during the foaming process, the sets of parameters can be used in any cases, where the flowing of the foam mixture is relevant. They can be used to predict a mold filling process in a virtual mold filling simulation system. They can be used to adapt a mold and/or a mold filling process in such a way that a desired mold filling can be achieved. In any case, the sets of parameters allow for predicting a mold filling behavior of a foam mixture, such that the number of required extensive experimental work is significantly reduced.

In one or several embodiments, at determining the first set of parameters, the first model is matched with the first experimental data in such a way that a pre-defined criterion is met. In this way, a termination criterion for the determining step can be provided. Such pre-defined criterion might be formed by a threshold which should be the maximum difference between a measured value and a corresponding result of the first model. The pre-defined criterion might also be a minimum mean square between several measured values and a parametrized first model.

In one or several embodiments, matching the first model with the first experimental data comprises determining a difference between first experimental data and the time-related behavior determined by the first model, and wherein the one or several parameters of the first model is/are adapted iteratively so that the difference is minimized. In this way, a parametrized first model can describe a time-related behavior that is close to the behavior measured during the first test.

In one or several embodiments, at determining the second set of parameters, the second model is matched with the second experimental data in such a way that a pre-defined criterion is met. In this way, a termination criterion for the determining step can be provided. Such pre-defined criterion might be formed by a threshold which should be the maximum difference between a measured value and a corresponding result of the second model. The pre-defined criterion might also be a minimum mean square between several measured values and a parametrized first model.

In one or several embodiments, matching the second model with the second experimental data comprises determining a difference between a foam propagation determined by the second model and second experimental data, and wherein the one or several parameters of the second model is/are adapted iteratively so that the difference is minimized. In this way, a parametrized second model can describe a space and time related behavior that is close to the behavior measured during the second test.

In one or several embodiments, the one or more parameters of the first model comprise at least one of a pressure, a pressure difference, a length difference, a volume rate, an extension rate, a reaction rate, a melt viscosity, a temperature, a weight, and a density. A pressure can define how the expanding foam mixture is pressed forward during the foaming process. A pressure difference can define how the pressure at the external surface of the expanding foam differs from the internal pressure at various points of the expanding foam mixture. A volume rate can indicate how quickly the foam mixture is expanding in all directions. An extension rate can indicate how quickly the foam mixture is extending in general. A reaction rate can indicate how fast or how slow the chemical reactions within the foaming mixture progresses. A melt viscosity can describe how good the foam mixture flows during the foaming process. A temperature can describe at which temperature the foam mixture starts with the foaming process and/or how the temperature develops during the foaming process. A weight can show the amount of foam mixture which is present in the mold and capable of reacting.

In one or several embodiments, the one or several parameters of the second model comprise at least one of a shear rate, a pressure, a pressure difference, a length difference, a volume rate, an extension rate, a melt viscosity, a temperature, a weight and a density. A shear rate can define how fast the foaming mixture shears or deforms during flow. A pressure can define how the expanding foam mixture is pressed forward during the foaming process. A pressure difference can define how the pressure at the external surface of the expanding foam differs from the internal pressure at various point of the expanding foam mixture. A volume rate can indicate how quickly the foam mixture is expanding in all directions. An extension rate can indicate how quickly the foam mixture is extending in general. A melt viscosity can describe how good the foam mixture flows during the foaming process. A temperature can describe at which temperature the foam mixture starts with the foaming process and/or how the temperature develops during the foaming process. A weight can show the amount of foam mixture which is present in the mold and capable of reacting.

In one or several embodiments, at least one parameter of the first set of parameters is used at determining the second set of parameters. In that way, the determination of the first set of parameters can directly support the determination of the second set of parameters. In this case, the sequence of the determining steps can be relevant.

In one or several embodiments, determining the first set of parameters and/or determining the second set of parameters is performed iteratively, wherein initial values of the one or several parameters preferably are based on empirical parameters. An iterative determination can be easily implemented on a processor or the like. The empirical parameters can be selected from earlier measurements with a similar foam mixture.

In one or several embodiments, the method additionally comprises inputting at least one of the first set of parameters and the combination of the first and second set of parameters to a mold simulation system, and, by the mold simulation system, performing an injection molding simulation using the input of at least one of the first set of parameters and the combination of first and second set of parameters. The mold simulation system can have a model of the mold. The mold model can be provided by a three-dimensional representation of the mold, e.g., via CAD (computer aided design) data. The mold model can additionally comprise information about the walls of the mold, e.g., their roughness, their temperature, their flexibility, etc. The mold simulation system can simulate a mold filling process based on the determined parameters. In this way, it can be estimated, whether the mold, the foam mixture, and/or properties of the injection should be adapted for getting better mold filling results.

In one or several embodiments, the method additionally comprises inputting the at least one of the first set of parameters and the combination of the first and second set of parameters to an injection molding system, and, by the injection molding system, performing an injection molding using the at least one of the first set of parameters, the second set of parameters and a combination of first and second set of parameters. In that way, the results of the parameter determination and/or the optimization can be tested at a real object.

According to another aspect of the invention the present disclosure also proposes a corresponding system for predicting a mold filling process of a foam mixture, preferably being configured for carrying out the method as described above, the foam mixture expanding and several characteristics of the foam mixture changing during a foaming process, the system comprising:
A first experimental data interface, configured to receive first experimental data, the first experimental data comprising first measured values of at least one of the several characteristics, wherein at least some of the first measured values are measured at different points of time during an expansion of the foam mixture, preferably in a cavity,
A first model interface, configured to receive a first model, the first model describing a time-related behavior of at least one of the several characteristics during an expansion of the foam mixture, wherein the first model comprises one or several parameters,
A first parameter determiner, configured to determine a first set of parameters based on the first experimental data and the first model,
A second experimental data interface, configured to receive second experimental data, the second experimental data comprising second measured values representing a propagation of the foam mixture expanding on a predefined surface, wherein the predefined surface is formed by an inclined surface so that the foam mixture flows on the surface by the influence of gravity during the foaming process,
A second model interface, configured to receive a second model, the second model describing a foam propagation during an expansion of the foam mixture on the predefined inclined surface, wherein the second model comprises one or several parameters,
A second parameter determiner, configured to determine a second set of parameters based on the second experimental data and the second model, and

An output interface, configured to output at least one of the first set of parameters, the second set of parameters and a combination of the first and second set of parameters to be used at predicting the mold filling process of the foam mixture.

The advantages of the method described above also apply to the system.

In one or several embodiments the system additionally comprises a mold simulation system, being configured to perform an injection molding simulation using the at least one of the first set of parameters, the second set of parameters and a combination of first and second set of parameters.

According to another aspect of the invention the present disclosure also proposes a computer program product comprising instructions which, when the program is executed by a computer, cause the computer to carry out the method as described above.

According to another aspect of the invention the present disclosure also proposes a computer-readable storage medium comprising instructions which, when executed by a computer, cause the computer to carry out the method as described above.

Further features and embodiments are disclosed in connection with the attached drawings. It should be noted that the following description refers to a specific embodiment of the disclosure and that is should not be understood as a limitation of the claimed subject-matter. The drawings show:
- Fig. 1: a flow chart of an embodiment of a method according to the present disclosure and
- Fig. 2: a block diagram of a system according to the present disclosure.

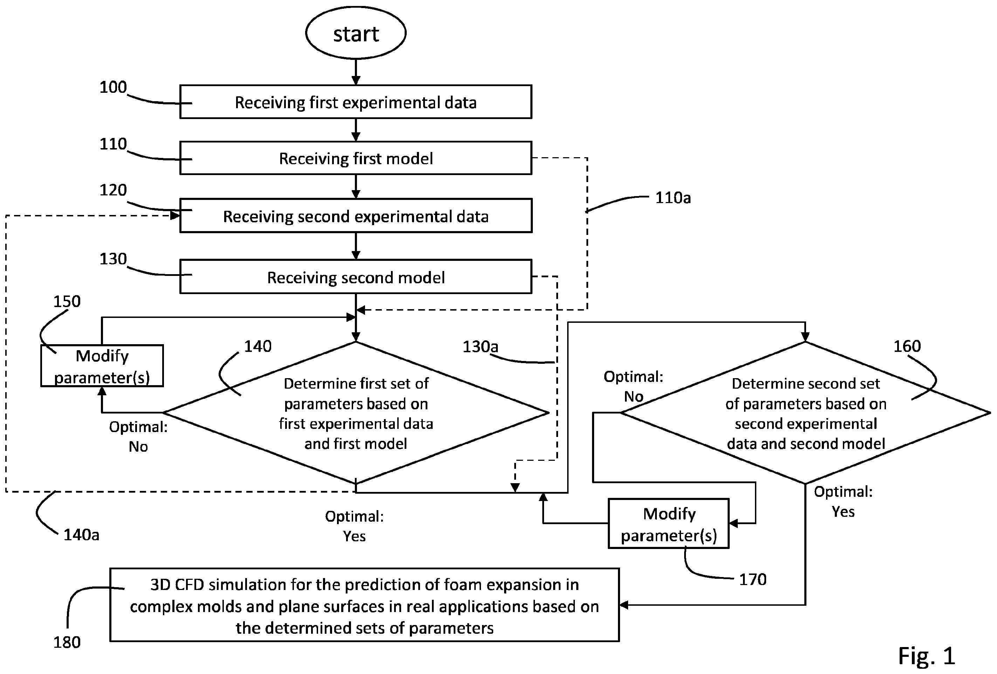

Fig. 1 shows a flow chart of an embodiment of a method according to the present disclosure. The method starts at the block labeled with "Start". In step 100, first experimental data is received. The first experimental data comprises first measured values of at least one of the several characteristics of the foam mixture, wherein at least some of the first measured values are measured at different points of time during a foaming process of the foam mixture. The measured expansion preferably takes place in a cavity, e.g., a beaker. In step 110, a first model is received. The first model describes a time-related behavior of at least one of the several characteristics of the foam mixture changing during an expansion of the foam mixture, wherein the first model comprises one or several parameters. The first experimental data and the first model should refer to similar things, e.g., the free-rising behavior of the foam mixture in a beaker.

In step 120, second experimental data is received. The second experimental data comprises second measured values representing a propagation of the foam mixture expanding on a predefined surface. The predefined surface can be formed by an inclined surface. In step 130, a second model is received. The second model describes a foam propagation during a foaming process of the foam mixture, preferably on the predefined surface, wherein the second model comprises one or several parameters.

In step 140, a first set of parameters is determined based on the received first experimental data and the received first model. This may include execution of a 0D optimization algorithm to compute optimal kinetic model parameters for the Chemical kinetics of the expanding foam. In a general point of view, this may be performed by determining one or several differences between first measured values and results of the first model. The absolute value of the difference(s) should be smaller or equal to a first threshold, so that the first set of parameters can be regarded as "optimal". If the parameters are not optimal ("Optimal: No"), at least one parameter of the first model is modified in step 150. After that, step 140 is executed again. If the parameters are optimal ("Optimal: Yes"), the method continues with step 160.

In step 160, a second set of parameters is determined based on the second experimental data and the second model. Additionally, the first set of parameters might be used. This step may include execution of a 3D optimization algorithm for optimized viscosity model parameters using the inclined surface experiment. The determination of the second set of parameters may be performed by determining one or several differences between second measured values and results of the second model. The absolute value of the difference(s) should be smaller or equal to a second threshold so that the second set of parameters can be regarded as "optimal". The second threshold might be identical to the first threshold, so that the first and second thresholds might also be identified as threshold. If the parameters are not optimal ("Optimal: No"), at least one parameter of the second model is modified in step 170. After that, step 160 is executed again. If the parameters are optimal ("Optimal: Yes"), the method continues at step 180.

In step 180, the determined parameters are used for predicting a mold filling process. The determined parameters might comprise the first set of parameters and/or the second set of parameters and/or a combination of the first and second sets of parameters. One way of "using" the determined parameters may be outputting the determined parameters to be used at predicting the mold filling process of the foam mixture. In Fig. 1, the determined parameters are used in step 180 at a 3D CFD simulation, i.e., a three-dimensional computational fluid dynamics simulation. In this step, the foam expansion of the foam mixture within a mold (generally a complex mold) and/or on plane surfaces in real applications is predicted based on the determined parameters. However, it should be noted that the determined parameters can also be used in other ways, e.g., at controlling an injection molding process and/or at adapting an existing mold for optimizing the mold filling behavior.

Within the scope of the embodiment of Fig. 1 a modified order of steps in the method may be implemented in that the first experimental data is received in step 100 and the first model received in step 110 whereupon the first set of parameters is determined based on the received first experimental data and the received first model by skipping steps 120, 130 as indicated by dashed line 110a. After optimal parameters are determined in step 140 the method is continued with steps 120 and 130 as indicated by dashed line 140a. With the second experimental data as received in step 120 and the second model as received in step 130 the second set of parameters based on second experimental data and second model may then be determined in step 160 (dashed line 130a). It is, of course, possible to perform steps 100 and 120, since the experiments are independent, before proceeding with steps 110, 140 and 150 followed by steps 130, 160, 170 and then 180 .

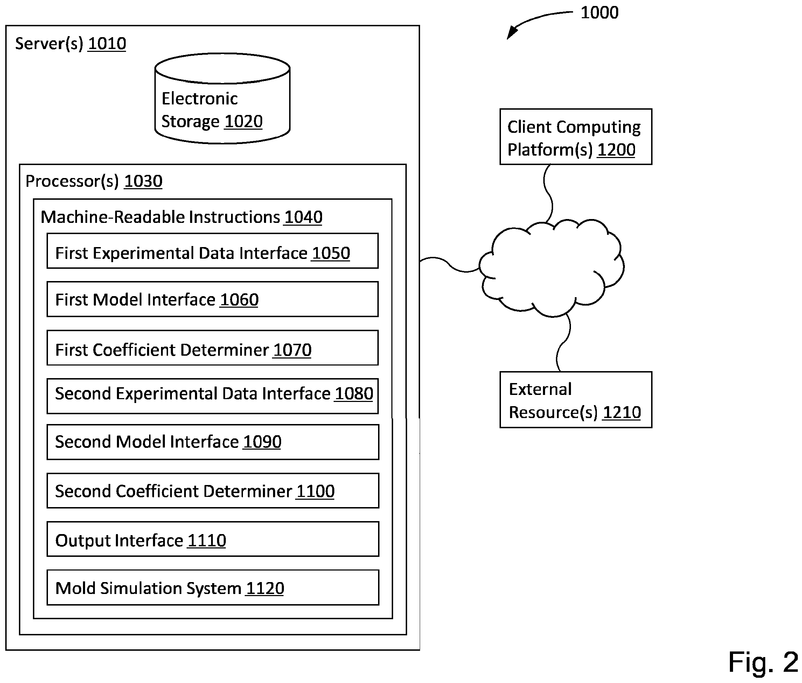

Fig. 2 illustrates a data processing apparatus system 1000 configured for predicting a mold filling process of a foam mixture. In some implementations, system 1000 may include one or more servers 1010. Server(s) 1010 may be configured to communicate with one or more client computing platforms 1200 according to a client/server architecture and/or other architectures. Client computing platform(s) 1200 may be configured to communicate with other client computing platforms via server(s) 1010 and/or according to a peer-to-peer architecture and/or other architectures. Users may access system 1000 via client computing platform(s) 1200.

Server(s) 1010 may be configured by machine-readable instructions 1040. Machine-readable instructions 1040 may include one or more instruction modules. The instruction modules may include computer program modules. The instruction modules may include one or more of a first experimental data interface 1050, a first model interface 1060, a first parameter determiner 1070, a second experimental data interface 1080, a second model interface 1090, a second parameter determiner 1100, an output interface 1110, a mold simulation system 1120 and/or other instruction modules and/or systems.

The first experimental data interface 1050 may be configured to receive first experimental data, the first experimental data comprising first measured values of at least one of the several characteristics, wherein at least some of the first measured values are measured at different points of time during an expansion of the foam mixture, preferably in a cavity. The first model interface 1060 may be configured to receive a first model, the first model describing a time-related behavior of at least one of the several characteristics during an expansion of the foam mixture, wherein the first model comprises one or several parameters. The first parameter determiner 1070 may be configured to determine a first set of parameters based on the first experimental data and the first model. The second experimental data interface 1080 may be configured to receive second experimental data, the second experimental data comprising second measured values representing a propagation of the foam mixture expanding on a predefined surface. The second model interface 1090 may be configured to receive a second model, the second model describing a foam propagation during an expansion of the foam mixture, preferably on the predefined surface, wherein the second model comprises one or several parameters. The second parameter determiner 1100 may be configured to determine a second set of parameters based on the second experimental data and the second model. The output interface 1110 may be configured to output at least one of the first set of parameters, the second set of parameters and a combination of the first and second set of parameters to be used at predicting the mold filling process of the foam mixture. The mold simulation system 1120 may be configured to perform an injection molding simulation using the at least one of the first set of parameters, the second set of parameters and a combination of first and second set of parameters.

In some implementations, server(s) 1010, client computing platform(s) 1200, and/or external resources 1210 may be operatively linked via one or more electronic communication links. For example, such electronic communication links may be established, at least in part, via a network such as the Internet and/or other networks. It will be appreciated that this is not intended to be limiting, and that the scope of this disclosure includes implementations in which server(s) 1010, client computing platform(s) 1200, and/or external resources 1210 may be operatively linked via some other communication media.

A given client computing platform 1200 may include one or more processors configured to execute computer program modules. The computer program modules may be configured to enable an expert or user associated with the given client computing platform 1200 to interface with system 1000 and/or external resources 1210, and/or provide other functionality attributed herein to client computing platform(s) 1200. By way of non-limiting example, the given client computing platform 1200 may include one or more of a desktop computer, a laptop computer, a handheld computer, a tablet computing platform, a NetBook, a Smartphone and/or other computing platforms.

External resources 1210 may include sources of information outside of system 1000, external entities participating with system 1000, and/or other resources. In some implementations, some or all of the functionality attributed herein to external resources 1210 may be provided by resources included in system 1000.

Server(s) 1010 may include electronic storage 1020, one or more processors 1030, and/or other components. Server(s) 1010 may include communication lines, or ports to enable the exchange of information with a network and/or other computing platforms. Illustration of server(s) 1010 in Fig. 2 is not intended to be limiting. Server(s) 1010 may include a plurality of hardware, software, and/or firmware components operating together to provide the functionality attributed herein to server(s) 1010. For example, server(s) 1010 may be implemented by a cloud of computing platforms operating together as server(s) 1010.

Electronic storage 1020 may comprise non-transitory storage media that electronically stores information. The electronic storage media of electronic storage 1020 may include one or both of system storage that is provided integrally (i.e., substantially non-removable) with server(s) 1010 and/or removable storage that is removably connectable to server (s) 1010 via, for example, a port (e.g., a USB port, a firewire port, etc.) or a drive (e.g., a disk drive, etc.). Electronic storage 1020 may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage 1020 may include one or more virtual storage resources (e.g., cloud storage, a virtual private network, and/or other virtual storage resources). Electronic storage 1020 may store software algorithms, information determined by processor(s) 1030, information received from server(s) 1010, information received from client computing platform(s) 1200, and/or other information that enables server(s) 1010 to function as described herein.

Processor(s) 1030 may be configured to provide information processing capabilities in server(s) 1010. As such, processor(s) 1030 may include one or more of a digital processor, an analog processor, a digital circuit designed to process information, an analog circuit designed to process information, a state machine, and/or other mechanisms for electronically processing information. A1though processor(s) 1030 is shown in Fig. 2 as a single entity, this is for illustrative purposes only. In some implementations, processor(s) 1030 may include a plurality of processing units. These processing units may be physically located within the same device, or processor(s) 1030 may represent processing functionality of a plurality of devices operating in coordination. Processor(s) 1030 may be configured to execute modules 1050, 1060, 1070, 1080, 1090, 1100, 1110 and/or 1120, and/or other modules by software; hardware; firmware; some combination of software, hardware, and/or firmware; and/or other mechanisms for configuring processing capabilities on processor(s) 1030. As used herein, the term "module" may refer to any component or set of components that perform the functionality attributed to the module. This may include one or more physical processors during execution of processor readable instructions, the processor readable instructions, circuitry, hardware, storage media, or any other components.

It should be appreciated that although the machine-readable instructions 1040 implementing modules 1050, 1060, 1070, 1080, 1090, 1100, 1110 and/or 1120 are illustrated in Fig. 2 as being executed within a single processing unit, in implementations in which processor(s) 1030 includes multiple processing units, one or more of modules 1050, 1060, 1070, 1080, 1090, 1100, 1110 and/or 1120 may be implemented remotely from the other modules. The description of the functionality provided by the different modules 1050, 1060, 1070, 1080, 1090, 1100, 1110 and/or 1120 is for illustrative purposes, and is not intended to be limiting, as any of modules 1050, 1060, 1070, 1080, 1090, 1100, 1110 and/or 1120 may provide more or less functionality than is described.

## Claims

1. A method for predicting a mold filling process of a foam mixture, the foam mixture expanding and several characteristics of the foam mixture changing during a foaming process, comprising:
Receiving first experimental data (100), the first experimental data comprising first measured values of at least one of the several characteristics, wherein at least some of the first measured values are measured at different points of time during a foaming process of the foam mixture, preferably in a cavity,
Receiving a first model (110), the first model describing a time-related behavior of at least one of the several characteristics during an expansion of the foam mixture, wherein the first model comprises one or several parameters,
Determining a first set of parameters based on the first experimental data and the first model,
Receiving second experimental data (120), the second experimental data comprising second measured values representing a propagation of the foam mixture expanding on a predefined surface,
Receiving a second model (130), the second model describing a foam propagation during a foaming process of the foam mixture on the predefined inclined surface, wherein the second model comprises one or several parameters,
Determining a second set of parameters based on the second experimental data and the second model, and
Outputting at least one of the first set of parameters, the second set of parameters and a combination of the first and second set of parameters to be used at predicting the mold filling process of the foam mixture, **characterized in that** the predefined surface is formed by an inclined surface so that the foam mixture flows on the surface by the influence of gravity during the foaming process.

2. The method according to claim 1, wherein the inclination of the surface is bigger or equally to 1° relative to a horizontal direction, in particular bigger or equal to 5°, preferably bigger or equal to 10°, and/or
wherein the inclination of the surface is smaller or equal to 50° relative to a horizontal direction, in particular smaller or equal to 30°, and preferably smaller or equal to 20°.

3. The method according to claims 1 or 2, wherein, at determining the first set of parameters, the first model is matched with the first experimental data in such a way that a pre-defined criterion is met.

4. The method according to claim 3, wherein matching the first model with the first experimental data comprises determining a difference between first experimental data and the time-related behavior determined by the first model, and wherein the one or several parameters of the first model is/are adapted iteratively so that the difference is minimized.

5. The method according to any one of claims 1 to 4, wherein, at determining the second set of parameters, the second model is matched with the second experimental data in such a way that a pre-defined criterion is met.

6. The method according to claim 5, wherein matching the second model with the second experimental data comprises determining a difference between a foam propagation determined by the second model and second experimental data, and wherein the one or several parameters of the second model is/are adapted iteratively so that the difference is minimized.

7. The method according to any one of claims 1 to 6, wherein the one or more parameters of the first model comprise at least one of a pressure, a pressure difference, a length difference, a volume rate, an extension rate, a reaction rate, a melt viscosity, a temperature, a weight and a density, and/or wherein the one or several parameters of the second model comprise at least one of a shear rate, an extension rate, a volume rate, a length difference, a temperature, a weight, a density, a pressure, a pressure difference, and a melt viscosity.

8. The method according to any one of claims 1 to 7, wherein at least one parameter of the first set of parameters is used at determining the second set of parameters.

9. The method according to any one of claims 1 to 8, wherein determining the first set of parameters and/or determining the second set of parameters is performed iteratively, wherein initial values of the one or several parameters preferably are based on empirical parameters.

10. The method according to any one of claims 1 to 9, additionally comprising inputting at least one of the first set of parameters and the combination of the first and second set of parameters to a mold simulation system, and, by the mold simulation system, performing an injection molding simulation using the input at least one of the first set of parameters and the combination of first and second set of parameters.

11. The method according to any one of claims 1 to 10, additionally comprising inputting the at least one of the first set of parameters, the second set of parameters and the combination of the first and second set of parameters to an injection molding system, and, by the injection molding system, performing an injection molding using the at least one of the first set of parameters, the second set of parameters and a combination of first and second set of parameters.

12. A system for predicting a mold filling process of a foam mixture, being configured for carrying out the method of one of claims 1 to 11, the foam mixture expanding and several characteristics of the foam mixture changing during a foaming process, the system comprising:
A first experimental data interface, configured to receive first experimental data, the first experimental data comprising first measured values of at least one of the several characteristics, wherein at least some of the first measured values are measured at different points of time during an expansion of the foam mixture, preferably in a cavity,
A first model interface, configured to receive a first model, the first model describing a time-related behavior of at least one of the several characteristics during an expansion of the foam mixture, wherein the first model comprises one or several parameters,
A first parameter determiner, configured to determine a first set of parameters based on the first experimental data and the first model,
A second experimental data interface, configured to receive second experimental data, the second experimental data comprising second measured values representing a propagation of the foam mixture expanding on a predefined surface,
A second model interface, configured to receive a second model, the second model describing a foam propagation during an expansion of the foam mixture on the predefined inclined surface, wherein the second model comprises one or several parameters,
A second parameter determiner, configured to determine a second set of parameters based on the second experimental data and the second model, and
An output interface, configured to output at least one of the first set of parameters, the second set of parameters and a combination of the first and second set of parameters to be used at predicting the mold filling process of the foam mixture, **characterized in that** the predefined surface is formed by an inclined surface so that the foam mixture flows on the surface by the influence of gravity during the foaming process.

13. The system according to claim 12, additionally comprising a mold simulation system, being configured to perform an injection molding simulation using the at least one of the first set of parameters, the second set of parameters and a combination of first and second set of parameters.

14. A computer program product comprising instructions which, when the program is executed by a computer, cause the computer to carry out the method of one of claims 1 to 11.

15. A computer-readable storage medium comprising instructions which, when executed by a computer, cause the computer to carry out the method of one of claims 1 to 11.

## Patentansprüche

1. Verfahren zum Vorhersagen eines Formfüllprozesses einer Schaumstoffmischung, wobei sich die Schaumstoffmischung ausdehnt und sich mehrere Charakteristiken der Schaumstoffmischung während eines Schäumprozesses ändern, umfassend:
Empfangen erster experimenteller Daten (100), wobei die ersten experimentellen Daten erste Messwerte von mindestens einer der mehreren Charakteristiken umfassen, wobei mindestens einige der ersten Messwerte zu unterschiedlichen Zeitpunkten während eines Schäumprozesses der Schaumstoffmischung, vorzugsweise in einem Hohlraum, gemessen werden,
Empfangen eines ersten Modells (110), wobei das erste Modell ein zeitbezogenes Verhalten von mindestens einer der mehreren Charakteristiken während einer Ausdehnung der Schaumstoffmischung beschreibt, wobei das erste Modell einen oder mehrere Parameter umfasst,
Bestimmen eines ersten Satzes von Parametern basierend auf den ersten experimentellen Daten und dem ersten Modell,
Empfangen zweiter experimenteller Daten (120), wobei die zweiten experimentellen Daten zweite Messwerte umfassen, die eine Ausbreitung der Schaumstoffmischung, die sich auf einer vordefinierten Oberfläche ausdehnt, repräsentieren,
Empfangen eines zweiten Modells (130), wobei das zweite Modell eine Schaumstoffausbreitung während eines Schäumungsprozesses der Schaumstoffmischung auf der vordefinierten geneigten Oberfläche beschreibt, wobei das zweite Modell einen oder mehrere Parameter umfasst, Bestimmen eines zweiten Satzes von Parametern basierend auf den zweiten experimentellen Daten und dem zweiten Modell und
Ausgeben von mindestens einem des ersten Satzes von Parametern, des zweiten Satzes von Parametern und einer Kombination des ersten und des zweiten Satzes von Parametern, die beim Vorhersagen des Formfüllprozesses der Schaumstoffmischung verwendet werden sollen, **dadurch gekennzeichnet, dass** die vordefinierte Oberfläche durch eine geneigte Oberfläche gebildet wird, so dass die Schaumstoffmischung durch den Einfluss der Schwerkraft während des Schäumprozesses auf die Oberfläche fließt.

2. Verfahren nach Anspruch 1, wobei die Neigung der Oberfläche größer oder gleich 1° relativ zu einer horizontalen Richtung, insbesondere größer oder gleich 5°, vorzugsweise größer oder gleich 10°, ist, und/oder wobei die Neigung der Oberfläche kleiner oder gleich 50° relativ zu einer horizontalen Richtung, insbesondere kleiner oder gleich 30° und vorzugsweise kleiner oder gleich 20°, ist.

3. Verfahren nach Anspruch 1 oder 2, wobei beim Bestimmen des ersten Satzes von Parametern das erste Modell mit den ersten experimentellen Daten derart abgestimmt wird, dass ein vordefiniertes Kriterium erfüllt wird.

4. Verfahren nach Anspruch 3, wobei das Abstimmen des ersten Modells mit den ersten experimentellen Daten ein Bestimmen einer Differenz zwischen ersten experimentellen Daten und dem durch das erste Modell bestimmten zeitbezogenen Verhalten umfasst und wobei der eine oder die mehreren Parameter des ersten Modells iterativ angepasst wird/werden, sodass die Differenz minimiert wird.

5. Verfahren nach einem der Ansprüche 1 bis 4, wobei beim Bestimmen des zweiten Satzes von Parametern das zweite Modell mit den zweiten experimentellen Daten derart abgestimmt wird, dass ein vordefiniertes Kriterium erfüllt wird.

6. Verfahren nach Anspruch 5, wobei das Abstimmen des zweiten Modells mit den zweiten experimentellen Daten ein Bestimmen einer Differenz zwischen einer Schaumstoffausbreitung, die durch das zweite Modell bestimmt wird, und zweiten experimentellen Daten umfasst und wobei der eine oder die mehreren Parameter des zweiten Modells iterativ angepasst wird/werden, sodass die Differenz minimiert wird.

7. Verfahren nach einem der Ansprüche 1 bis 6, wobei der eine oder die mehreren Parameter des ersten Modells mindestens eines von einem Druck, einer Druckdifferenz, einer Längendifferenz, einer Volumenrate, einer Ausdehnungsrate, einer Reaktionsgeschwindigkeit, einer Schmelzviskosität, einer Temperatur, einem Gewicht und einer Dichte umfasst/umfassen, und/oder
wobei der eine oder die mehreren Parameter des zweiten Modells mindestens eines von einer Scherrate, einer Ausdehnungsrate, einer Volumenrate, einer Längendifferenz, einer Temperatur, einem Gewicht, einer Dichte, einem Druck, einer Druckdifferenz und einer Schmelzviskosität umfasst/umfassen.

8. Verfahren nach einem der Ansprüche 1 bis 7, wobei mindestens ein Parameter des ersten Satzes von Parametern beim Bestimmen des zweiten Satzes von Parametern verwendet wird.

9. Verfahren nach einem der Ansprüche 1 bis 8, wobei das Bestimmen des ersten Satzes von Parametern und/oder das Bestimmen des zweiten Satzes von Parametern iterativ durchgeführt wird/werden, wobei Anfangswerte des einen oder der mehreren Parameter(s) vorzugsweise auf empirischen Parametern basieren.

10. Verfahren nach einem der Ansprüche 1 bis 9, das zusätzlich ein Eingeben von mindestens einem des ersten Satzes von Parametern und der Kombination des ersten und des zweiten Satzes von Parametern in ein Formsimulationssystem und, durch das Formsimulationssystem, Durchführen einer Spritzgusssimulation unter Verwendung der Eingabe von mindestens einem des ersten Satzes von Parametern und der Kombination des ersten und des zweiten Satzes von Parametern umfasst.

11. Verfahren nach einem der Ansprüche 1 bis 10, das zusätzlich ein Eingeben des mindestens einen des ersten Satzes von Parametern, des zweiten Satzes von Parametern und der Kombination des ersten und des zweiten Satzes von Parametern in ein Spritzgusssystem und, durch das Spritzgusssystem, Durchführen eines Spritzgießens unter Verwendung des mindestens einen des ersten Satzes von Parametern, des zweiten Satzes von Parametern und einer Kombination des ersten und des zweiten Satzes von Parametern umfasst.

12. System zum Vorhersagen eines Formfüllprozesses einer Schaumstoffmischung, das zum Ausführen des Verfahrens nach einem der Ansprüche 1 bis 11 ausgelegt ist, wobei sich die Schaumstoffmischung ausdehnt und sich mehrere Charakteristiken der Schaumstoffmischung während eines Schäumprozesses ändern, wobei das System umfasst:
eine erste experimentelle Datenschnittstelle, die dazu ausgelegt ist, erste experimentelle Daten zu empfangen, wobei die ersten experimentellen Daten erste Messwerte von mindestens einer der mehreren Charakteristiken umfassen, wobei mindestens einige der ersten Messwerte zu unterschiedlichen Zeitpunkten während einer Ausdehnung der Schaumstoffmischung, vorzugsweise in einem Hohlraum, gemessen werden,
eine erste Modellschnittstelle, die dazu ausgelegt ist, ein erstes Modell zu empfangen, wobei das erste Modell ein zeitbezogenes Verhalten von mindestens einer der mehreren Charakteristiken während einer Ausdehnung der Schaumstoffmischung beschreibt, wobei das erste Modell einen oder mehrere Parameter umfasst,
einen ersten Parameterbestimmer, der dazu ausgelegt ist, einen ersten Satz von Parametern basierend auf den ersten experimentellen Daten und dem ersten Modell zu bestimmen, eine zweite experimentelle Datenschnittstelle, die dazu ausgelegt ist, zweite experimentelle Daten zu empfangen, wobei die zweiten experimentellen Daten zweite Messwerte umfassen, die eine Ausbreitung der Schaumstoffmischung, die sich auf einer vordefinierten Oberfläche ausdehnt, repräsentieren,
eine zweite Modellschnittstelle, die dazu ausgelegt ist, ein zweites Modell zu empfangen, wobei das zweite Modell eine Schaumstoffausbreitung während einer Ausdehnung der Schaumstoffmischung auf der vordefinierten geneigten Oberfläche beschreibt, wobei das zweite Modell einen oder mehrere Parameter umfasst,
einen zweiten Parameterbestimmer, der dazu ausgelegt ist, einen zweiten Satz von Parametern basierend auf den zweiten experimentellen Daten und dem zweiten Modell zu bestimmen, und
eine Ausgabeschnittstelle, die dazu ausgelegt ist, mindestens eines des ersten Satzes von Parametern, des zweiten Satzes von Parametern und einer Kombination des ersten und des zweiten Satzes von Parametern, die beim Vorhersagen des Formfüllprozesses der Schaumstoffmischung verwendet werden sollen, auszugeben, **dadurch gekennzeichnet, dass** die vordefinierte Oberfläche durch eine geneigte Oberfläche gebildet wird, so dass die Schaumstoffmischung durch den Einfluss der Schwerkraft während des Schäumprozesses auf die Oberfläche fließt.

13. System nach Anspruch 12, das zusätzlich ein Formsimulationssystem umfasst, das dazu ausgelegt ist, eine Spritzgusssimulation unter Verwendung des mindestens einen des ersten Satzes von Parametern, des zweiten Satzes von Parametern und einer Kombination des ersten und des zweiten Satzes von Parametern durchzuführen.

14. Computerprogrammprodukt, das Anweisungen umfasst, die, wenn das Programm durch einen Computer ausgeführt wird, den Computer veranlassen, das Verfahren nach einem der Ansprüche 1 bis 11 auszuführen.

15. Computerlesbares Speichermedium, das Anweisungen umfasst, die, wenn sie durch einen Computer ausgeführt werden, den Computer veranlassen, das Verfahren nach einem der Ansprüche 1 bis 11 auszuführen.

## Revendications

1. Procédé de prédiction d'un processus de remplissage d'un moule d'un mélange de mousse, le mélange de mousse subissant une expansion et plusieurs caractéristiques du mélange de mousse évoluant pendant un processus de moussage, comprenant :
la réception de premières données expérimentales (100), les premières données expérimentales comprenant des premières valeurs mesurées d'au moins une de la pluralité de caractéristiques, au moins certaines des premières valeurs mesurées étant mesurées à des instants différents pendant un processus de moussage du mélange de mousse, de préférence dans une cavité,
la réception d'un premier modèle (110), le premier modèle décrivant un comportement temporel d'au moins une de la pluralité de caractéristiques au cours d'une expansion du mélange de mousse, le premier modèle comprenant un ou plusieurs paramètres,
la détermination d'un premier ensemble de paramètres sur la base des premières données expérimentales et du premier modèle,
la réception de deuxièmes données expérimentales (120), les deuxièmes données expérimentales comprenant des deuxièmes valeurs mesurées représentant une propagation du mélange de mousse subissant une expansion sur une surface prédéfinie,
la réception d'un deuxième modèle (130), le deuxième modèle décrivant une propagation de mousse pendant un processus de moussage du mélange de mousse sur la surface inclinée prédéfinie, le deuxième modèle comprenant un ou plusieurs paramètres,
la détermination d'un deuxième ensemble de paramètres sur la base des deuxièmes données expérimentales et du deuxième modèle, et
la délivrance d'au moins un ensemble parmi le premier ensemble de paramètres, le deuxième ensemble de paramètres et une combinaison des premier et deuxième ensembles de paramètres à utiliser pour prédire le processus de remplissage du moule du mélange de mousse, **caractérisée en ce que** la surface prédéfinie est formée par une surface inclinée de sorte que le mélange de mousse coule sur la surface sous l'influence de la gravité pendant le processus de moussage.

2. Procédé selon la revendication 1, l'inclinaison de la surface étant supérieure ou égale à 1° par rapport à une direction horizontale, en particulier supérieure ou égale à 5°, de préférence supérieure ou égale à 10°, et/ou
l'inclinaison de la surface étant inférieure ou égale à 50° par rapport à une direction horizontale, en particulier inférieure ou égale à 30°, et de préférence inférieure ou égale à 20°.

3. Procédé selon la revendication 1 ou 2, dans lequel, lors de la détermination du premier ensemble de paramètres, le premier modèle est mis en correspondance avec les premières données expérimentales de telle manière qu'un critère prédéfini soit satisfait.

4. Procédé selon la revendication 3, la mise en correspondance du premier modèle avec les premières données expérimentales comprenant la détermination d'une différence entre les premières données expérimentales et le comportement temporel déterminé par le premier modèle, et le ou les paramètres du premier modèle étant adaptés de manière itérative de sorte que la différence est minimisée.

5. Procédé selon l'une quelconque des revendications 1 à 4, dans lequel, lors de la détermination du deuxième ensemble de paramètres, le deuxième modèle est mis en correspondance avec les deuxièmes données expérimentales de telle manière qu'un critère prédéfini soit satisfait.

6. Procédé selon la revendication 5, la mise en correspondance du deuxième modèle avec les deuxièmes données expérimentales comprenant la détermination d'une différence entre une propagation de mousse déterminée par le deuxième modèle et les deuxièmes données expérimentales, et le ou les paramètres du deuxième modèle étant adaptés itérativement de sorte que la différence est minimisée.

7. Procédé selon l'une quelconque des revendications 1 à 6, le ou les paramètres du premier modèle comprenant au moins un paramètre parmi une pression, une différence de pression, une différence de longueur, un taux de volume, une vitesse d'extension, une vitesse de réaction, une viscosité à l'état fondu, une température, un poids et une masse volumique, et/ou
le ou les paramètres du deuxième modèle comprenant au moins un paramètre parmi un taux de cisaillement, un taux d'extension, un taux de volume, une différence de longueur, une température, un poids, une masse volumique, une pression, une différence de pression et une viscosité à l'état fondu.

8. Procédé selon l'une quelconque des revendications 1 à 7, au moins un paramètre du premier ensemble de paramètres étant utilisé pour déterminer le deuxième ensemble de paramètres.

9. Procédé selon l'une quelconque des revendications 1 à 8, la détermination du premier ensemble de paramètres et/ou la détermination du deuxième ensemble de paramètres étant réalisées de manière itérative, les valeurs initiales du ou des paramètres étant de préférence basées sur des paramètres empiriques.

10. Procédé selon l'une quelconque des revendications 1 à 9, comprenant en outre l'introduction du premier ensemble de paramètres et/ou de la combinaison du premier et du deuxième ensemble de paramètres dans un système de simulation de moule, et, par le système de simulation de moule, la réalisation d'une simulation de moulage par injection en utilisant le premier ensemble de paramètres et/ou la combinaison du premier et du deuxième ensemble de paramètres qui ont été introduits.

11. Procédé selon l'une quelconque des revendications 1 à 10, comprenant en outre l'introduction de l'ensemble ou des ensembles parmi le premier ensemble de paramètres, le deuxième ensemble de paramètres et la combinaison du premier et du deuxième ensemble de paramètres dans un système de moulage par injection, et par le système de moulage par injection, la réalisation d'un moulage par injection en utilisant l'ensemble ou les ensembles parmi le premier ensemble de paramètres, le deuxième ensemble de paramètres et une combinaison du premier et du deuxième ensemble de paramètres.

12. Système de prédiction d'un processus de remplissage d'un moule d'un mélange de mousse, configuré pour réaliser le procédé selon l'une des revendications 1 à 11, le mélange de mousse subissant une expansion et plusieurs caractéristiques du mélange de mousse évoluant pendant un processus de moussage, le système comprenant :
une première interface de données expérimentales configurée pour recevoir des premières données expérimentales, les premières données expérimentales comprenant des premières valeurs mesurées d'au moins l'une de la pluralité de caractéristiques, au moins certaines des premières valeurs mesurées étant mesurées à des instants différents au cours d'une expansion du mélange de mousse, de préférence dans une cavité,
une première interface de modèle, configurée pour recevoir un premier modèle, le premier modèle décrivant un comportement temporel d'au moins une de la pluralité de caractéristiques au cours d'une expansion du mélange de mousse, le premier modèle comprenant un ou plusieurs paramètres,
un premier moyen de détermination de paramètres, configuré pour déterminer un premier ensemble de paramètres sur la base des premières données expérimentales et du premier modèle,
une deuxième interface de données expérimentales, configurée pour recevoir des deuxièmes données expérimentales, les deuxièmes données expérimentales comprenant des deuxièmes valeurs mesurées représentant une propagation du mélange de mousse subissant une expansion sur une surface prédéfinie,
une deuxième interface de modèle, configurée pour recevoir un deuxième modèle, le deuxième modèle décrivant une propagation de mousse au cours d'une expansion du mélange de mousse sur la surface inclinée prédéfinie, le deuxième modèle comprenant un ou plusieurs paramètres,
un deuxième moyen de détermination de paramètres, configuré pour déterminer un deuxième ensemble de paramètres sur la base des deuxièmes données expérimentales et du deuxième modèle, et
une interface de sortie, configurée pour délivrer au moins un ensemble parmi le premier ensemble de paramètres, le deuxième ensemble de paramètres et une combinaison des premier et deuxième ensembles de paramètres à utiliser pour prédire le processus de remplissage du moule du mélange de mousse, **caractérisée en ce que** la surface prédéfinie est formée par une surface inclinée de sorte que le mélange de mousse coule sur la surface sous l'influence de la gravité pendant le processus de moussage.

13. Système selon la revendication 12, comprenant en outre un système de simulation de moule, configuré pour effectuer une simulation de moulage par injection en utilisant l'ensemble ou les ensembles parmi le premier ensemble de paramètres, le deuxième ensemble de paramètres et une combinaison du premier et du deuxième ensemble de paramètres.

14. Produit-programme informatique comprenant des instructions qui, lorsque le programme est exécuté par un ordinateur, amènent l'ordinateur à réaliser le procédé selon l'une des revendications 1 à 11.

15. Support de stockage lisible par ordinateur comprenant des instructions qui, lorsqu'elles sont exécutées par un ordinateur, amènent l'ordinateur à réaliser le procédé selon l'une des revendications 1 à 11.
